# EUROPEAN PATENT SPECIFICATION

(11) **EP 2 032 749 B1**
(45) Date of publication and mention of the grant of the patent: **03.08.2011**
(21) Application number: 07733174.2
(22) Date of filing: 11.06.2007
(51) Int. Cl.: D01F 9/133, C01B 31/02, B01J 8/00, B01J 8/08, B01J 8/10, B01J 19/02

(54) **CARBON NANO-FIBRE PRODUCTION**
CARBONNANOFASERHERSTELLUNG
PRODUCTION DE NANOFIBRES DE CARBONE

(30) Priority: 09.06.2006 GB 0611485
(43) Date of publication of application: 11.03.2009
(73) Proprietor: StatoilHydro ASA, 4035 Stavanger (NO)
(72) Inventor: EDWIN, Emil, 4035 Stavanger (NO); BRUSTAD, Morten, 4035 Stavanger (NO); AASER, Knut-Ivar, 4035 Stavanger (NO); RyTTER, Erling, 4035 Stavanger (NO); MIKKELSEN, Oyvind, 4620 Kristiansand S (NO); JOHANSEN, Johan, Arnold, 4035 Stavanger (NO)
(74) Representative: Samuels, Adrian James
(86) International application number: PCT/GB2007/002165
(87) International publication number: WO 2007/141558

(56) References cited:
- EP-A- 1 445 236

## Description

The present invention relates to improvements in and relating to carbon nano-fibre (CNF) production, and in particular to a method and reactor, especially a method and reactor suitable for efficient, particularly continuous or semi-continuous, production of CNF, and optionally also of hydrogen.

It has long been known that the interaction of hydrocarbon gas and metal surfaces can give rise to dehydrogenation and the growth of carbon "whiskers" on the metal surface. More recently it has been found that such carbon whiskers, which are hollow carbon fibres having a diameter of about 3 to 100 nm and a length of about 0.1 to 1000 µm, have interesting and potentially useful properties, e.g. the ability to act as reservoirs for hydrogen storage (see for example Chambers et al. in J.Phys.Chem. B 102: 4253-4256 (1998) and Fan et al. in Carbon 37: 1649-1652 (1999)).

Several researchers have thus sought to produce carbon nano-fibres and to investigate their structure, properties and potential uses and such work is described in a review article by De Jong et al in Catal. Rev. - Sci. Eng. 42: 481-510 (2000) which points out that the cost of the CNF is still relatively high (ca. US $50/kg or more). There is thus a need for a process by which CNF may be produced more efficiently.

As described by De Jong et al. (supra) and in a further review article by Rodriguez in J. Mater. Res. 8: 3233-3250 (1993), transition metals such as iron, cobalt, nickel, chromium, vanadium and molybdenum, and their alloys, catalyse the production of CNF from gases such as methane, carbon monoxide, synthesis gas (ie H₂/CO), ethyne and ethene. In this reaction, such metals may take the form of flat surfaces, of micro-particles (having typical sizes of about 100 nm) or of nanoparticles (typically 1-20 nm in size) supported on an inert carrier material, e.g. silica, alumina, titania, zirconia or carbon. The metal of the catalyst must be one which can dissolve carbon or form a carbide.

Both De Jong et al (supra) and Rodriguez (supra) explain that carbon absorption and CNF growth is favoured at particular crystallographic surfaces of the catalyst metal.

Although methods of producing small amounts of carbon products such as carbon nano-fibres are known in the art, methods of producing large quantities efficiently and with reliable quality have so far proved difficult to realise, particularly on an industrial scale.

Existing techniques for the synthesis of products such as carbon nano-fibres (CNF) include arc discharge, laser ablation and chemical vapour deposition. These techniques generally involve vaporising carbon electrodes at elevated temperatures. For example, the laser ablation technique involves using a laser to vaporise a graphite target in an oven. The arc discharge technique involves carbon rods, placed end to end, which are vaporised in an inert gas.

Many of these techniques involve batch processes which do not produce reliable and consistent carbon product quality in any great volume. For example, arc discharge production methods often produce CNF products which have a random size distribution and therefore require substantial purification. Laser ablation techniques on the other hand require high power sources and expensive laser equipment which leads to a high unit cost of product delivered by this technique.

Fluidised bed reactors have been considered as a means to alleviate some of these problems associated with synthesising carbon and particulate products. However, the large scale production of carbon products, and in particular CNF products with uniform product size and quality, has proved difficult to achieve using conventional reactors. Fluidised bed reactors suffer from the difficulties of harvesting the synthesised product from the fluidised region and in particular do not allow products of a certain size to be harvested efficiently from the reaction region. Typically the harvested products will comprise a mixture of product quality, some having had a longer reaction time in the bed than others. This does not provide a reliable output product from the reactors.

EP 1445236 describes a reactor having the features of the preamble to claim 1.

There is therefore a need for a method and a reactor which can efficiently and reliably produce CNF.

Thus, viewed from a first aspect, the present invention provides a reactor for carbon nano-fibre production comprising a generally horizontal elongate cylindrical reaction vessel arranged to rotate about its cylindrical axis and containing in use a particulate catalyst-containing reaction bed, said reaction vessel having a gas inlet port and a gas outlet port positioned such that one of said inlet and outlet ports is in said bed and the other is outside, eg above, said bed.

Viewed from a further aspect, the invention also provides a method of producing carbon nano-fibres, which comprises catalytically converting a carbonaceous gas to carbon nano-fibres in a reactor containing a catalyst-containing particulate reaction bed within a generally horizontal elongate cylindrical reaction vessel rotating about its cylindrical axis, said vessel having a gas inlet port and a gas outlet port one of which is within said bed and the other of which is outside said bed.

It will be appreciated that the reaction vessel may be provided with more than one gas inlet port and with more than one gas outlet port.

To minimise catalyst deactivation, the inlet gas (or feed gas) is preferably fed into the reaction vessel at a plurality of points. The inlet port moreover may be disposed away from the reaction vessel inner wall towards or at the reaction vessel centre. If this arrangement is adopted, the gas conduits extending into the reaction vessel are preferably made of or coated with a ceramic material or an oxide dispersion strengthened alloy so as to reduce surface corrosion.

The particulate catalyst may be introduced into the reaction vessel via the gas inlet port. Alternatively, the reaction vessel may be provided with one or more catalyst inlet ports through which the catalyst can be introduced.

Preferably, a catalyst inlet port introduces catalyst into the reaction vessel proximate the reaction region so that the catalyst is dispersed into the reaction region, ie the reaction bed. The catalyst may be introduced into the reactor in a powder form using a gas or alternatively may be introduced into the reactor using a liquid.

The catalyst may be introduced continuously or batchwise. The catalyst may be introduced into the reaction vessel entrained in a carbonaceous feed gas; however to reduce carbon deposition in the feed lines, it will generally be preferred to use a gas or liquid carrier which does not react with the catalyst. Nitrogen may thus be used as a carrier in this regard.

The reaction vessel may be provided with more than one CNF outlet port although in general it is believed one will be sufficient.

The reaction vessel may have a product collection area arranged at the outlet of the reaction vessel and may also have means to remove CNF product from the reactor or product collection area.

Particularly preferably the CNF product outlet port leads to a CNF product collection vessel which is isolatable from the reaction vessel, e.g. to permit removal of the collection vessel from the reactor or to permit removal of the CNF product from the collection vessel (eg through a product removal port in the collection vessel). The collection vessel will preferably be provided with a cooling means, e.g. a cooling jacket. Especially preferably the cooling means is a heat exchanger whereby heat may be transferred from the CNF product to the carbonaceous feed gas.

The reaction vessel may be surrounded by an outer casing surrounding and supporting the reaction vessel. The outer casing, gas inlet, gas outlet and the CNF product outlet port (and associated conduits) may be manufactured from a high temperature steel. The reaction vessel moreover is preferably disposed within an outer pressure vessel, eg a concentric cylindrical pressure vessel.

The gas inlet and outlet ports and the CNF product outlet port (and associated conduits) are preferably manufactured from a steel with a silicon content of between 1.8 % and 2.3% and a chromium content of greater than 30%. Sophisticated materials with more than 2.5% aluminium, eg APM, APMt (manufactured by Sandvik, SE), PM2000 (manufactured by Plansee, NL), or MA956 (manufactured by Special Metals) may also be used. Conventional chromium based tubing can be used to reduce the iron fraction of the metal surface and thereby reduce the tendency towards dusting or carbon deposition on the surface of the tubing or conduits. The reaction vessel may also be manufactured from similar material. Preferably however the reaction vessel is manufactured from or lined with a high temperature resistant castable ceramic material such as, for example, Ceramite (trademark) manufactured by Elkem ASA, Norway.

In general, all metal parts in the reactor that are exposed to temperatures above 700°C and a hydrocarbon (eg methane) and hydrogen atmosphere should desrirably be formed from alumina-forming alloys (eg as described above). This is particularly important for components of the feed gas pre-heaters (which for methane feed gas desirably bring the gas temperature to 800-900 °C) and the gas inlet ports. Other metal components exposed to temperatures below 700°C may be formed from similar or lower grade materials, eg provided with an alumin or aluminizing coating so as to avoid long term carburization degradation.

The reaction within the reaction vessel may take place at ambient temperature and pressure. Preferably however the reactor operates at an elevated temperature and pressure. Preferably the reactor operates between 2 and 25 bar and more preferably between 5 and 20 bar. Most preferably the reactor operates between 5 and 15 bar. The reactor may typically operate at a temperature of up to 1000 °C. Preferably the reactor operates in the range 400 °C to 900 °C and most preferably in the range 550 °C to 900 °C. In this context, temperature and pressure refer to temperature and pressure in the reaction bed. The outer pressure vessel will generally be internally pressurised to a pressure equal to the pressure within the reaction vessel. This is particularly advantageous where a ceramic reaction vessel is used. Pressure equalising across the inner and outer walls of the reaction vessel reduces stresses within the ceramic material when reaction takes place at elevated pressures. The outer pressure vessel may further be provided with an insulating layer between it and the reaction vessel outer wall. The insulating material may, for example, be an insulating mineral wool or some other suitable insulating material, for example a refractory ceramic.

Where endothermic reactions take place within the reaction vessel the reactor may be provided with means to heat the reaction region and/or gas within the reaction vessel. The heating means may be heating coils for example and may be integrated into the wall of the reaction vessel. The heating means may, for example, be arranged in cavities or apertures within a ceramic reaction vessel.

Alternatively, heating coils may be arranged around the exterior of the reaction vessel or within the reaction vessel itself.

Where the reaction is endothermic, heat is preferably also provided into the reaction region by introducing the feed gas into the reaction vessel at elevated temperature. Where one of the gases making up the feed gas is reactive with ferrous metals at elevated temperatures, e.g. where carbon monoxide is used, it will generally be desirable to introduce such a gas at a lower temperature than that used for the remaining gases.

To reduce heat loss from the reactor, it is desirable to have at least part of the inlet gas pre-heater located within the reactor, eg between the reaction vessel and the outer pressure vessel, for example on the outer wall of the reaction vessel or in a ceramic lining of the pressure vessel. Likewise it is desirable that one or both of the reaction vessel and the pressure vessel be provided with insulation to reduce heat loss from reaction vessel and reactor. The spacing between reaction vessel and pressure vessel is desirably kept at a temperature below 600 °C.

As mentioned above, the reactor may further include means to cool the CNF product leaving the reaction vessel. For example, the reactor may be provided with a cooling cavity or jacket surrounding the CNF outlet port of the reactor or arranged adjacent to the CNF outlet port. The cooling cavity may be provided with a continuous flow of coolant such as water or feed gas which reduces the temperature of the product leaving the reaction vessel. Other coolants can equally be employed in the cooling cavity to cool the product.

The reactor may conveniently have a volume of 10 to 100m³, preferably 50 to 70m³ allowing a total product content in the thousands of kilograms. For continuous operation, inlet gas feed rates of 500 to 2000 kg/hour, eg 1000 to 1500 kg/hour, and product removal rates of 200 to 2000 kg/hour, eg 750 to 1250 kg/hour may thus typically be achieved. The energy supply necessary to operate such a reactor for the production of carbon will typically be in the hundreds of kW, eg 100 to 1000 kW, more typically 500 to 750kW. Alternatively expressed, the energy demand will typically be in the range 1 to 5 kW/kgC.hour⁻¹, e.g. 2-3.5kW/kgC.hour⁻¹.

Any suitable catalyst may be used in the production of CNF which can dissolve carbon or form a carbide and which is capable of being penetrated by the gas flow within the reactor.

The catalyst may be any transition metal such as iron, cobalt, nickel, chromium, vanadium and molybdenum or other alloy thereof. Preferably the catalyst is an FeNi catalyst. The catalyst may be supported on an inert carrier material such as silica, alumina, titania, zirconia or carbon.

More preferably the catalyst used is a porous metal catalyst comprising a transition metal or an alloy thereof, e.g. as described in WO03/097910. The use of the Raney metal catalysts described in WO03/097910 especially the Amperkat (trademark) catalyst mentioned therein is especially preferred.

The catalyst may be pre-treated to increase carbon production rate and carbon yield and this may be achieved with any carbon production catalyst, i.e. not just porous metal catalysts, by a limited period of exposure to a feed gas with reduced or no hydrogen content at a lower temperature than the reaction temperature in the main carbon production stage. Such pre-treatment is preferably under process (i.e. reactor) conditions under which the carbon activity of the catalyst is greater than in the main carbon production stage. This process thus comprises in a first stage contacting a catalyst for carbon production with a first hydrocarbon-containing gas at a first temperature for a first time period and subsequently contacting said catalyst with a second hydrocarbon-containing gas at a second temperature for a second time period, characterised in that said first gas has a lower hydrogen (H₂) mole percentage than said second gas, said first temperature is lower than said second temperature, and said first period is shorter than said second period. If a higher graphitic contact of the carbon product is desired, the first temperature may be reduced and/or the second temperature may be increased.

The temperature in the first period is preferably in the range 400 to 600 °C, especially 450 to 550 °C, more especially 460 to 500 °C. The hydrogen mole percentage in the first period is preferably 0 to 2% mole, especially 0 to 1% mole, more especially 0 to 0.25% mole, particularly 0 to 0.05% mole. The pressure in the first period is preferably 5 to 15 bar, especially 6 to 9 bar. The duration of the first period is preferably 1 to 60 minutes, more especially 2 to 40 minutes, particularly 5 to 15 minutes. The temperature, pressure and gas composition, in the second period are preferably as described above for the reactor.

Pre-treatment or initiation of the catalyst causes the catalyst to become a catalyst/carbon agglomerate comprising particles of a carbon-containing metal having carbon on the surfaces thereof. Before this pre-treatment, the catalyst may if desired be treated with hydrogen at elevated temperature, e.g. to reduce any surface oxide.

The gas flowing from the gas inlet to the gas outlet may be any suitable gas for sustaining the reaction in the reaction region. Thus, the carbonaceous feed gas may be any C₁₋₃ hydrocarbon such as methane, ethene, ethane, propane, propene, ethyne, carbon monoxide or natural gas or any mixture thereof. Alternatively, the gas may be an aromatic hydrocarbon or napthene.

The inlet gas may also include a proportion of hydrogen to reduce the carbon activity of the catalyst metal, i.e. the rate of carbon uptake by the metal. The gas may typically contain 1 to 20 % mole of hydrogen. Preferably the gas contains 2 to 10 % mole hydrogen.

The inlet gas may include carbon monoxide. However, carbon monoxide is preferably introduced at a lower temperature (e.g. <300 °C), for example through a separate feed line, e.g. to avoid dusting of ferrous metal feed lines which can occur at temperatures above 400°C. Carbon monoxide is a desirable component of the feed gas as the reaction to produce carbon is less endothermic than that of methane for example.

When carbon monoxide is introduced into the reaction vessel through a separate gas inlet, the main feed gas inlet may have a correspondingly higher inlet temperature such that the gases mix in the reaction vessel to produce a mixture at the appropriate temperature.

Where the feed gas passes through metal pipes or conduits (such as iron or chromium based metals or alloys), the oxide layer on the surface of the pipe or conduit (which acts to protect the metal) can be maintained by introducing a small quantity of an oxygenaceous compound (e.g. water or CO₂) into the feed gas.

The inlet or feed gas may be recirculated completely or partially from the gas outlet back to the gas inlet. Alternatively the gas may flow through the reactor once. More preferably a proportion of gas is recirculated internally within the reactor. Internal recirculation (or backmixing) of the gas within the reactor can be used to control the hydrogen content within the reactor and thus reduce the amount of hydrogen which needs to be introduced into the reaction vessel.

Gas removed from the reaction vessel is preferably passed through a separator in which hydrogen is removed by metallic hydride formation. Pellets of a metallic hydride in a column absorb the produced hydrogen at a low temperature, and the absorbed hydrogen can then be recovered by raising the temperature in the column.

Excess hydrogen may alternatively be removed by passing the gas past a membrane, polymer membrane or pressure swing absorber (PSA). The membrane may for example be a palladium membrane. Hydrogen retrieved in this way may be an end product of the carbon production reaction or it may be burned to provide energy, e.g. to heat the feed gas.

On the small scale, energy supply into the reactor may be achieved by externally heating the reaction vessel or by inclusion within the reactor of heating means or heat exchange elements connected to a heat source. The heating means may for example be electrically powered heating coils and may be integrated into the wall of the reaction vessel. The heating means may be arranged in cavities or apertures within the ceramic material, where the inner wall of the reaction vessel is of ceramic material.

As reactor size increases however it will become more necessary to heat the inlet or feed gas that is supplied to the reaction vessel.

The gas may be partially pre-heated or completely pre-heated to the reactor operating temperature before it enters the reaction vessel. Preferably the gas is part pre-heated before entering the reaction vessel and heated further to the operating temperature inside the reaction vessel using the reactor heating means. The gas may be pre-heated by heat exchange from the gas outlet flow leaving the reaction vessel.

The inlet gas may be fully or partially pre-heated as described above using any suitable heating means. One suitable method of pre-heating the gas is to use the outlet or exhaust gas and a suitable heat exchanging arrangement. It will be recognised that numerous heat exchanging arrangements may be used.

Alternatively or additionally the gas may be heated within the reactor pressure vessel using suitable conduits disposed around or proximate the reaction vessel walls. In this way, the feed gas is heated before it is introduced into the reaction bed. The inlet gas carrying conduit may be arranged around the reaction vessel walls, for example in a spiral or serpentine arrangement.

It will be recognised that other arrangements of conduits within the reactor pressure vessel may be conveniently used to pre-heat the inlet gas.

The gas flowing from the gas outlet which is not recycled back into the reaction vessel may be incinerated or may, alternatively, be fed into a hydrocarbon gas stream to be used as a fuel gas or sales gas provided that the level of hydrogen is acceptable.

The carbon produced in the reactor may be processed after removal from the reaction vessel, e.g. to remove catalyst material, to separate carbon fibres from amorphous material, to mix in additives, or by compaction. Catalyst removal typically may involve acid or base treatment; carbon fibre separation may for example involve dispersion in a liquid and sedimentation (e.g. centrifugation), possibly in combination with other steps such as magnetic separation; additive treatment may for example involve deposition of a further catalytically active material on the carbon, whereby the carbon will then act as a catalyst carrier, or absorption of hydrogen into the carbon; and compaction may be used to produce shaped carbon items, e.g. pellets, rods, etc.

Processing of the carbon product to reduce the catalyst content therein may also be achieved by heating, e.g. to a temperature above 1000°C, preferably above 2000°C, for example 2200 to 3000°C. The total ash content is also significantly reduced by this treatment.

Catalyst removal from the carbon product may also be effected by exposure to a flow of carbon monoxide, preferably at elevated temperature and pressure, e.g. at least 50 deg C and at least 20 bar, preferably 50 to 200 °C and 30 to 60 bar. The CO stream may be recycled after deposition of any entrained metal carbonyls at an increased temperature, e.g. 230 to 400 °C.

As a result of such temperature and/or carbon monoxide treatment an especially low metal content carbon may be produced, e.g. a metal content of less than 0.2% wt, especially less than 0.1% wt, particularly less than 0.05% wt, more particularly less than 0.01% wt, e.g. as low as 0.001% wt.

Catalyst may be introduced into the reactor as described with reference to the reactors described above.

As discussed above, it is important to be able to add heat to the reaction region particularly where endothermic reactions take place within a reaction region or bed. It is therefore desirable to provide a reactor with a number of gas inlets which can introduce heated feed gas into a reaction region.

This can be achieved for reactors wherein a reaction vessel is provided with a plurality of gas inlet ports or orifices.

The gas may be introduced directly into the reaction bed, for example using a conduit extending into the region, or may alternatively be introduced through ports in the reaction vessel wall proximate the reaction bed. The gas may be introduced into the reaction region at any angle.

Preferably the reaction vessel is arranged in a horizontal orientation; alternatively it may be arranged at an angle up to 45 degrees from the horizontal.

The gas outlet port and CNF product outlet port may be a common outlet port at the downstream end of the reaction vessel.

The reaction vessel may further be arranged so as to have an increasing cross-sectional area in the direction of gas flow.

The reaction vessel is arranged to rotate so as to agitate the reaction bed.. In such an arrangement, the inside of the reaction vessel may be provided with stirring members or means connected to the inside of the reaction vessel such that the bed is agitated and stirred as the reaction vessel rotates. This arrangement can be used to improve temperature distribution in the bed and/or to change the product size by erosion of the product.

Thus, gas can be provided along the length of the reaction region thereby improving the efficiency of the reaction.

The reaction vessel is preferably formed of a elongate cylindrical portion closed at a first end by a static (non-rotating) member having a profile corresponding to that of the end of the cylindrical portion, and partially closed at a second end by a second static member having a profile arranged to close only a portion of the second end of said cylindrical portion.

These static members may conveniently take the form of end plates perpendicular to the cylindrical axis of the reaction vessel and abutting the open cylinder ends. The CNF product itself will serve both as a lubricant and as a sealing agent for the point of contact between the cylinder and the end plate.

In one embodiment, the downstream endplate preferably has a substantially horizontal upper edge below the upper limit of the cylinder so that CNF will spill out from the reaction bed over this edge and into a CNF discharge assembly. The space above this upper edge can clearly also function as a gas outlet from the reaction vessel and in this embodiment the gas inlet is preferably within the reaction bed.

In an alternative embodiment, both end plates may close off the cylinder and a perforated conduit may be provided within the reaction bed which penetrates the end plates and functions as both gas and CNF outlet. With a CNF transporter within this conduit, eg a helical screw, CNF entering the conduit may be transported out of the reaction vessel to the CNF discharge assembly. In this format, the gas inlet port is above the reaction bed, eg taking the form of an axially elongate perforated conduit so that the feed gas is distributed over the reaction bed surface. In this embodiment, it may be desirable to have at least two such outlet ports within the bed.

Where the gas outlet ports are within the reaction bed, which is the preferred format for the reactor, it is especially preferred that the openings into the outlet conduit be so formed that the majority of the pressure drop occurs at these openings, ie that they are relatively small.

Where outlet ports are within the reaction bed, there is a risk that the openings into these ports may become clogged with CNF. This risk may be addressed for example by providing the outlet with a cooler (so as to reverse the CNF generation reaction at the openings), by mechanical cleaning (eg using an internal helical screw as mentioned above, or by having a rotatable perforated tube as the outlet and by providing the inner wall of the reaction vessel with a helical blade which scrapes and rotates the perforated tube), or by reversing the CNF generation reaction by backflushing with hydrogen (optionally containing some water). Gas inlet ports may likewise be unblocked in similar fashion or by decoking by flushing with an oxygenaceous gas (eg hot air).

Where the reaction vessel is closed at both ends, CNF may be removed in a batchwise fashion using a perforated conduit and helical screw substantially as described above which communicates via a valve with a CNF receiving chamber outside the reaction vessel. The screw can thus pack the chamber with CNF, whereafter the valve may be closed and the chamber emptied through a vent. The vent may then be shut, and the valve reopened.

In general, having the gas inlet outside, eg above, the reaction bed is preferred as generation of hot-spots (and catalyst deactivation) is reduced. Generation of hot-spots is also reduced by agitation of the reaction bed. The bed moreover is preferably relatively shallow, for example having a maximum depth of less than 50%, more preferably less than 30% of the internal diameter of the reaction vessel.

If desired, the reactor may operate in semi-batch mode rather than continuously, eg adding catalyst, running reaction (eg for 2-10 hours), removing some CNF, adding more catalyst, running reaction, etc.

It is particularly preferred that a set of reactors (eg 3-5 reactors) be operated in series with the outlet gas from at least the initial reactors being fed to a feed gas pre-heater (a heat exchanger optionally with additional heat input) and with the outlet gas from each but the last reactor then being used as inlet gas for the subsequent reactor. In this way, although the reaction vessel pressure will decrease from one reactor to the next, the overall conversion of carbonaceous gas to CNF may be increased, eg to about 30% for a series of three reactors operating at 8, 6 and 4 bar respectively.

The reaction vessel may be arranged to rotate at any suitable speed depending on the reaction within the reactor. Preferably the reaction vessel rotates a speed of between 0.1 and 10 revolutions per minute, more preferably between 0.2 and 8 revolutions per minute and most preferably 0.2 to 5 revolutions per minute.

The inlet gas may be introduced in use directly into a reaction bed within the reaction vessel or, alternatively, the inlet gas may be introduced above a reaction bed. Similarly the exhaust gas may be removed from above the reaction bed or from within the reaction bed.

Preferably the gas outlet port is in the form of an elongate tube extending along all or a portion of the length of the bed and is provided with a plurality of perforations in the walls thereof arranged to allow gas into the bed.

Preferably the gas inlet port is in the form of an elongate conduit extending along all or a portion of the length of the bed and arranged to introduce gas into the bed through an aperture, the aperture being shielded to prevent ingress of the reaction bed into the inlet port.

Preferably the gas inlet port comprises a conduit elongate in the axial direction of said reaction vessel and having an elongate opening funnel-shaped in transverse cross section whereby to cause gas to enter said reaction bed travelling in the same tangential direction as do the contents of said reaction bed.

Preferred embodiments and other aspects of the invention will now be described, by way of example only, and with reference to the accompanying drawings in which :
Figures 1 to 8 show schematics of a reactor according to a first embodiment of the invention;
Figure 9 shows a product discharge arrangement for a reactor according to the invention; and
Figure 10 shows a serial arrangement of reactors.

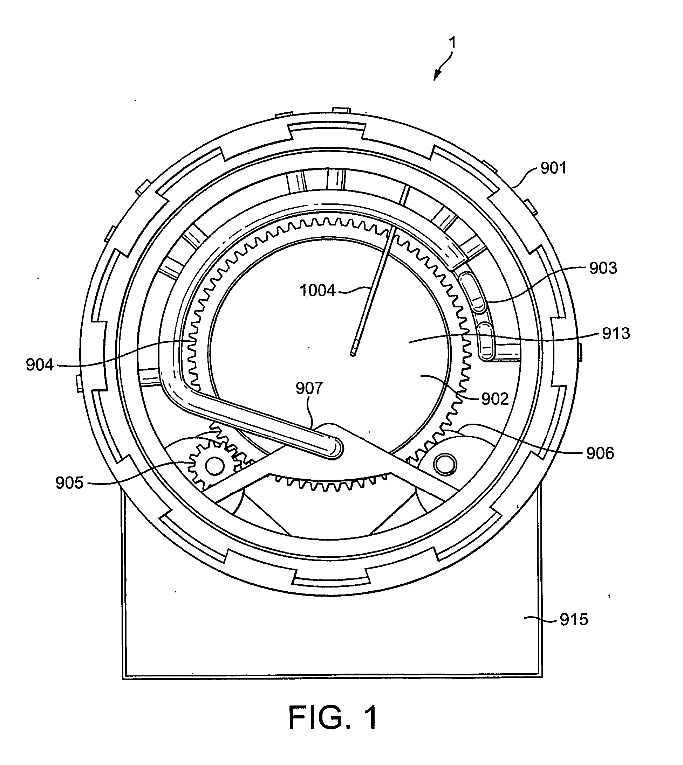

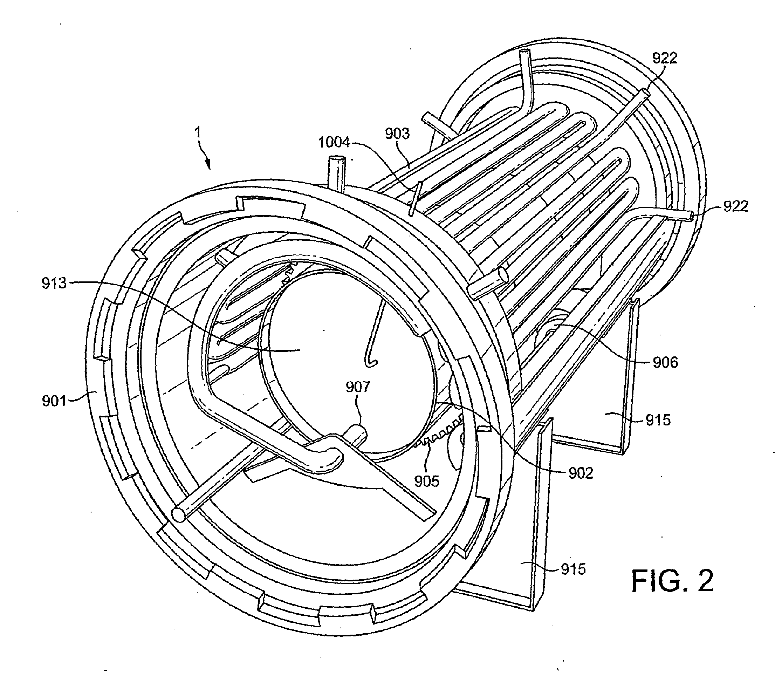

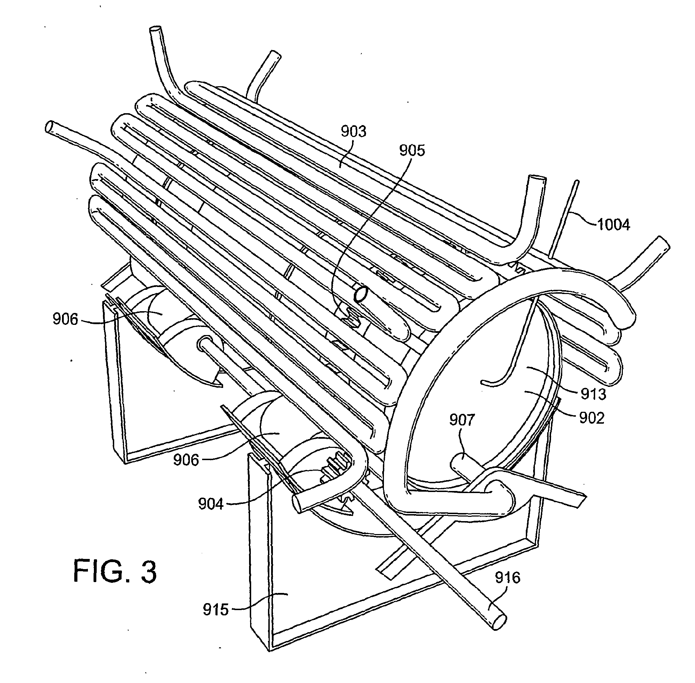

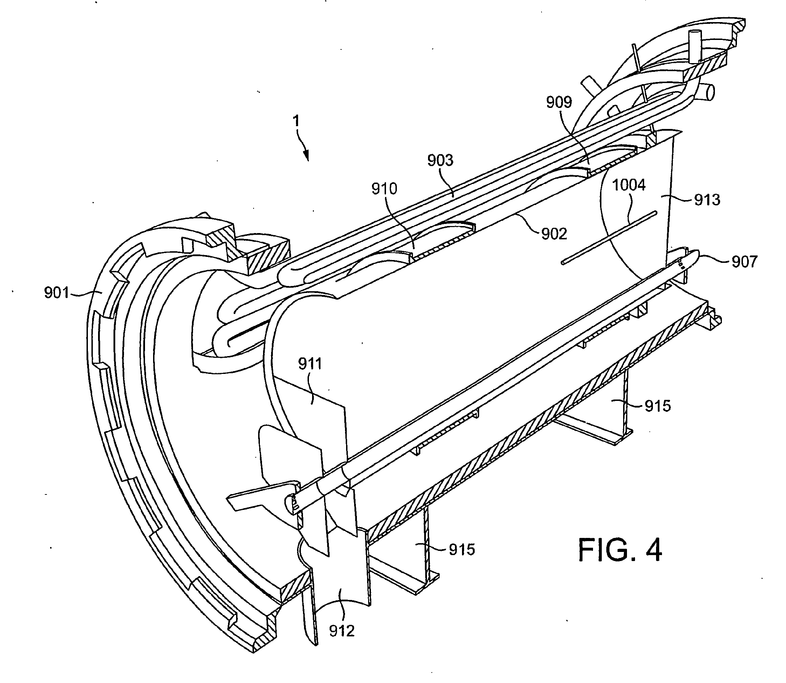

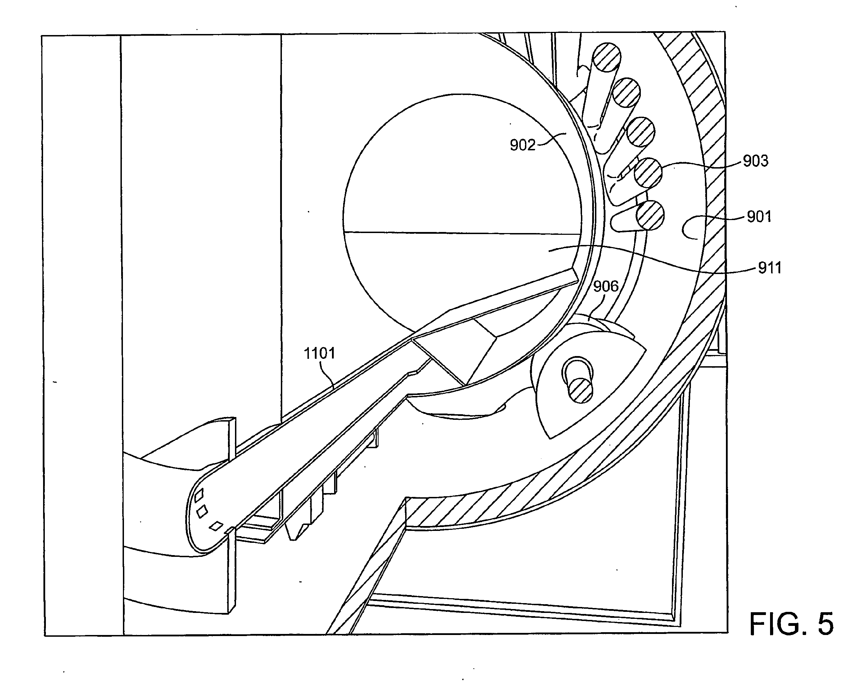

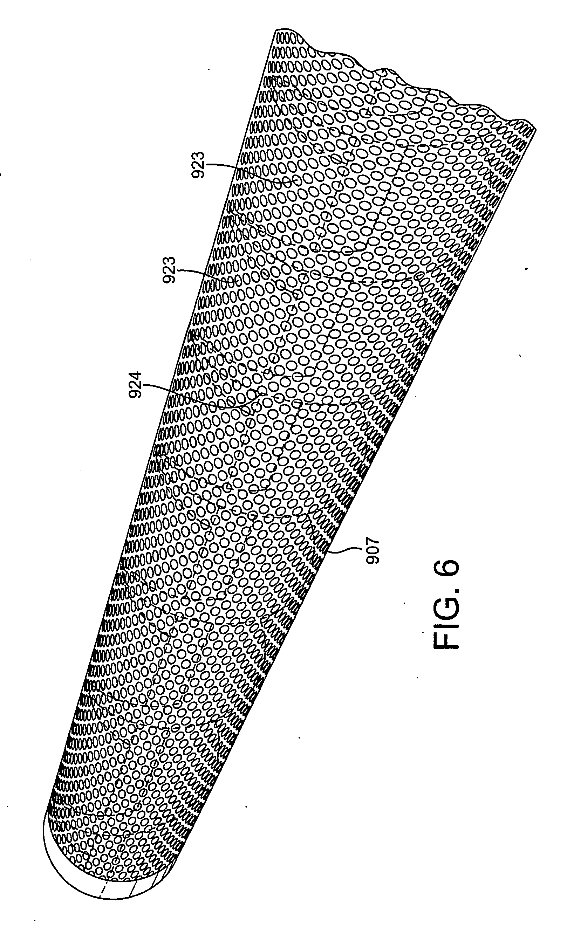

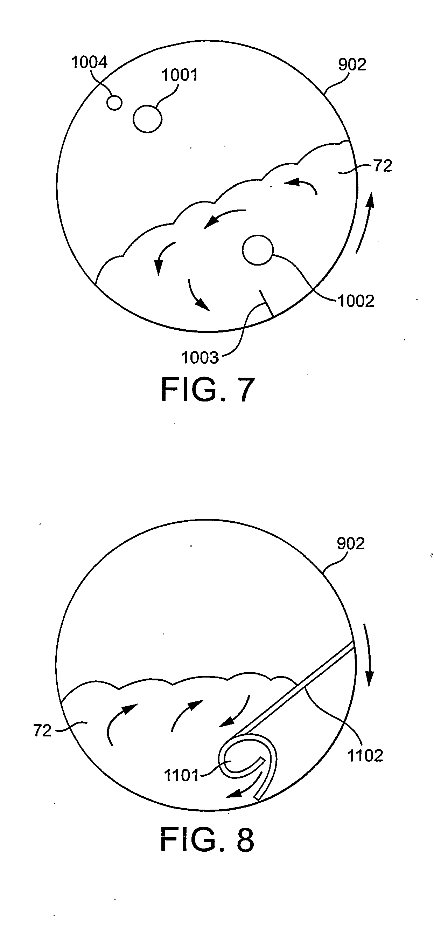

Figures 1 to 7 show various views of a reactor 1 according to the invention. Figure 1 is an end-on view from the upstream end of reaction vessel 902; Figure 2 is a perspective view from the right of the upstream end of reaction vessel 902; Figure 3 is a perspective view from the left of the upstream end of reaction vessel 902; Figure 4 is a cutaway perspective view from the left of the downstream end of reaction vessel 902 (ie from the same side of reaction vessel 902 as in Figure 3); Figure 5 is a cutaway perspective view of reaction vessel 902 looking downstream wherein an alternative form of gas inlet 1101 is disposed within the reaction bed; Figure 6 is a perspective view of an inlet port 907 for disposal within the reaction bed in the base of reaction vessel 902 as in Figure 4; Figure 7 is a schematic cross section through reaction vessel 902 showing the placement instead of the outlet port 1002 within the reaction bed; and Figure 8 is a schematic cross section through the reactor of Figure 5 in which inlet port 1101 is located within the reaction bed in reaction vessel 902.

As shown in Figures 1 to 5, the reaction vessel 902 (which is the rotating portion which contains the reaction bed 72) is contained within an outer pressure vessel 901. The outer pressure vessel also provides connections for the carbonaceous gas inlet port, catalyst inlet port, CNF outlet port and gas outlet port.

The reaction vessel 902 is preferably manufactured from Ceramite (registered trademark) (a castable high temperature ceramic material) surrounded and supported by an outer shell which is preferably manufactured from a high temperature steel.

In operation the pressure vessel 901 and the reaction vessel 902 are pressurised to equal pressure as one end of reaction vessel 902 is only partially closed by static end plate 911.

Figure 1 shows the outer pressure vessel 901, the reaction vessel (hereinafter referred to as the 'drum') 902, the inlet gas conduits 903 (in which inlet gas is heated) and a circumferentially located rack and pinion 904,905 which is arranged to rotate the drum about its longitudinal axis within the pressure vessel 901 under the operation of a drive motor (not shown) disposed outside the pressure vessel.

Support wheels 906 are positioned along the length of the drum so as to support the drum within the pressure vessel and to allow the drum to rotate.

As shown in Figure 2 the gas inlet conduits 903 form a number of pipe loops within the reactor pressure vessel 901 and outside the drum 902. The inlet gas may be pre-heated by suitable heat exchange, for example with the exhaust gases within or leaving the reactor. For example, the inlet gas may be arranged to flow through a conduit which is itself concentric with an outer conduit carrying the exhaust gases. Exhaust gas may then pass through the annulus of the conduit arrangement and inlet gas through the central conduit. Thus the inlet gas may be heated. It will be recognised that other forms of heating the gas may additionally or alternatively be employed.

Turning back to Figure 2 the conduits 903 are shown terminating at the inlet to the drum 902 shown by reference numeral 907.

The end portions 913,911 of the drum 902 are static and do not rotate with the elongate cylindrical portion. The inlet gas conduit 907 passes though the upstream end portion 913 as shown in Figures 2 and 4 so as to introduce gas into the reaction vessel above the reaction bed 72 (not shown in Figures 1 to 6).

Figure 3 shows an alternative view of the reactor with the outer pressure vessel casing partially cut away and reactor support legs 915 shown. Drive shaft 916 leads to the drive motor (not shown) which rotates drum 902.

Figure 4 shows a cut-away view of the reactor and specifically the product discharge, ie downstream, end of the reactor.

The outlet (or inlet) gas conduit 907 can be seen to enter the drum through the static end plate 913 at the upstream end and to extend along the length of the drum, passing out through static downstream end plate 911 and emptying any CNF contained in the conduit into discharge pipe 912.

The rotating portion of the drum 902 is also shown and is provided with circumferential support guides 909,910 which are arranged to cooperate with the support wheels 906 described above.

The downstream end portion 911 of the drum 902 is also shown. This is also arranged to be static, i.e. not to rotate with the rotating portion of the drum. As shown the upstream static end portion 913 extends across the entire cross-section of the drum while the downstream end portion 911 is arranged to extend across only a portion of the drum. The upper margin of this downstream end portion 911 defines the depth of the reaction bed at the downstream end as bed contents above this upper margin spill out into CNF discharge pipe 912 from which the CNF product can be removed from the reactor.

In the preferred embodiment an FeNi catalyst (e.g. a Raney metal catalyst of the type sold by H.C. Starck, GmbH & Co. AG, Goslar, Germany under the trademark Amperkat) is introduced into the reaction vessel through a catalyst inlet port, eg conduit 1004 in Figures 2, 4 and 7.

When the reactor is initially started an even layer of catalyst and catalyst support material is provided at the bottom of the reaction vessel 902. During operation of the reactor, supply of fresh catalyst is introduced via a suitable conduit preferably with a nozzle located at the centre of the reaction vessel. Catalyst supply is manually controlled from a control panel for instance.

The reaction vessel is fed with feed gas and catalyst at the required temperatures and pressures and the products begin to grow within the reaction bed. The end portions of the reactor act to contain the product in the reaction bed until the level of product reaches the top of the end portion 911 of the drum proximate the CNF discharge pipe 912. The product in effect cascades or falls over the top of the end portion 911 and out into the discharge port 912. Thus, products are not discharged prematurely and a reaction bed can be maintained within the drum.

At temperatures above 900 °C, the selection of reactor component construction materials is of significant importance as a result of the reactive atmosphere of methane and hydrogen.

It is preferred therefore to use specific alloys for the internal components of the reactor such as Oxide Dispersion Strengthened (ODS) alloys (manufactured by mechanical alloying techniques involving powder metallurgy) e.g. ATM, APTM (manufactured by Sandvik, of Sweden) or PM 2000 (manufactured by Plansee, of the Netherlands).

Figure 4 shows a gas inlet (or outlet) conduit 907 which is shown in further detail in Figure 6. It has been discovered that CNF growth can occur rapidly within the reactor and particularly on the gas inlet and gas outlet conduits. Build-up of product around the gas inlets and outlets can result in restriction of gas flow through the reaction bed and a reduction in efficiency and/or production.

Figure 6 shows an arrangement which overcomes some of the blocking problems which can result from product growth around the inlet or outlet ports. Figure 6 shows a cylindrical conduit 907 which is provided with a plurality of openings 923 along its length which allow the gas to pass into or out of the conduit. In effect the conduit has a 'mesh' appearance. Concentric with and within the conduit there is provided an elongate helix or 'auger' 924 having an outer diameter which corresponds generally to the inner diameter of the conduit. The helix is arranged to rotate and by virtue of the helix shape acts to move against the inner wall of the conduit and to clean the openings 923. Moreover, rotation of the helix serves to drive any CNF that has penetrated into the conduit towards the downstream end of the reaction vessel and out of the reaction vessel where it is emptied into CNF discharge pipe 912 (see Figure 4). Thus, the conduit can be kept clean by rotation of the helix within the conduit. It will be recognised that other shapes or profiles may be used within the conduit to achieve the same or similar result.

It has also been recognised that the inlet gas conduits can similarly become blocked by the growth of products in or around the conduits delivering feed gas or catalyst into the reactor. In some instances it may be necessary to un-block the inlet ports (or outlet ports if the outlet ports are disposed out of the reaction bed). This can conveniently be achieved by reversing the flow of gas through the reactor whilst the reactor is in operation. It will be appreciated that reversing the flow of the hydrogen containing gas through the reactor and through the conduits acts to remove the carbon deposits which form and which can block the conduits.

The arrangements shown in Figures 1 to 6 provide a reactor capable of large scale CNF production using a horizontal rotating reaction vessel arrangement.

The rotation of the drum minimises the deactivation within the reaction bed which may occur if the bed is not agitated. The bed may be further agitated by the provision of protuberances or the like coupled to the inner surface of the rotating portion of the drum, eg a blade 1003 as shown in Figure 7. Such blades may advantageously be helical so as to move the reaction bed towards the downstream end of the reaction vessel. This movement of the bed also efficiently distributes heat with the bed.

In another arrangement the inlet or, feed gas may be supplied by a conduit above the reaction bed rather than directly into the bed. In this arrangement the exhaust gas may be removed from the conduit passing through the bed itself, i.e. in such an arrangement the flow of gas is reversed through the reaction bed. Thus, the feed gas is introduced over the bed and passes down through the bed and to the exhaust conduit.

The inlet conduit(s) for both the inlet gas and the catalyst (which may itself be introduced into the bed or above the bed) may be provided with a helical member (or other suitable device) within the conduit(s) to prevent blocking as discussed above with reference to Figure 6.

Figure 7 shows an arrangement wherein gas is introduced into the reactor above the reaction bed by inlet port 1001. Gas leaves the reactor via the exhaust or outlet port 1002. Figure 7 also illustrates an agitating member 1003 coupled to the drum wall. As discussed above this aids heat distribution and minimises deactivation. The arrows indicate the general direction of movement of the CNF product within the reaction bed as well as the direction of rotation of the drum. Reference 1004 shows a catalyst inlet port again disposed above the bed in this arrangement.

Figures 5 and 8 show an arrangement wherein feed gas is introduced into the reaction bed itself via gas inlet conduit 1101. The profile of the inlet conduit 1101 is such that gas can be introduced into the bed at high velocities and is carried into the bed by virtue of the direction of rotation of the drum and movement of the product. This also acts to keep the inlet conduit clear of blockages. It will be appreciated that the inlet conduit 1101 extends along the length of the bed and thus the gas can be introduced along its entire length.

A further portion 1102 is also provided which is coupled to the inlet port 1101 and extends along the length of the drum. This portion 1102 is arranged to cooperate with the drum wall to remove CNF, i.e. to scrape the wall and allow the CNF to be introduced back into the bed. The arrows in Figure 8 show the general movement of the CNF product within the reaction bed, as well as the direction of rotation of the drum.

It will be recognised that the features described with reference to Figures 1 to 8 may be used in any convenient combination.

In operation, carbonaceous gas (e.g. 90% mole methane and 10% mole hydrogen) at a pressure of 10 bar is introduced into the gas inlet port 907 of the reactor, eg via one of conduits 903 and inlets 922. A further one of the plurality of inlets 922 shown in Figure 2 may be a carbon monoxide feed at a lower temperature than the methane feed. The gas flows into the reaction vessel and out of the reactor via a gas outlet port, which may for'example be part of CNF discharge port 912 or may be a concentric conduit within or surrounding one or more of conduits 903 which are linked to inlets/outlets 922.

The reaction taking place within a CNF producing reactor is the decomposition of methane into carbon and hydrogen, i.e.

CH₄ ---> C + 2H₂

The reaction is endothermic with hydrogen as a byproduct and requires that the reaction zone be heated, typically to a temperature of at least 650°C. The carbon product grows on the FeNi catalyst, and experiments show a growth ratio of 1:200. The carbon growth will end when the grown carbon obstructs the supply of methane to the FeNi catalyst.
The carbon nano-fibres grow on the surface of the FeNi catalyst which are suspended in the reaction region. In the reactor shown in Figures 1 to 6, the fibres grow until the reaction bed flows over the top surface of static end plate and into the CNF discharge port 912.

The gas leaving the reactor is partially recycled and fed back into the reactor through one of the inlets 922. The presence of too much hydrogen in the inlet gas reduces the carbon formation rate and hydrogen is therefore separated from the recycled outlet gas using a palladium membrane (not shown).

Before entering the reaction vessel, the gas is first pre-heated by passing the gas through a heat exchanger which exchanges heat from the outlet gas so as to reduce the heating requirements for the reactor, eg secondary heating using electrical heating coils (not shown) in or around the walls of the outer pressure vessel or the reaction vessel. Such additional heating may be used to raise the gas temperature to the operational temperature for CNF production.

The reactor provides a continuous flow process for producing carbon nano-fibres. Catalyst can be introduced into the reactor using a batch feed catalyst pre-treatment unit (not shown).

The CNF discharge port 912 (shown in Figure 4) feeds into a product removal unit (not shown). The removal unit at the bottom of the reactor should be able to remove the carbon product from the reactor in a safe manner. As the reactor is pressurised, the removal unit should retain the pressure within the reactor during the removal process. In addition, the explosive atmosphere surrounding the carbon should be vented off and purged with nitrogen before the carbon leaves the unit.

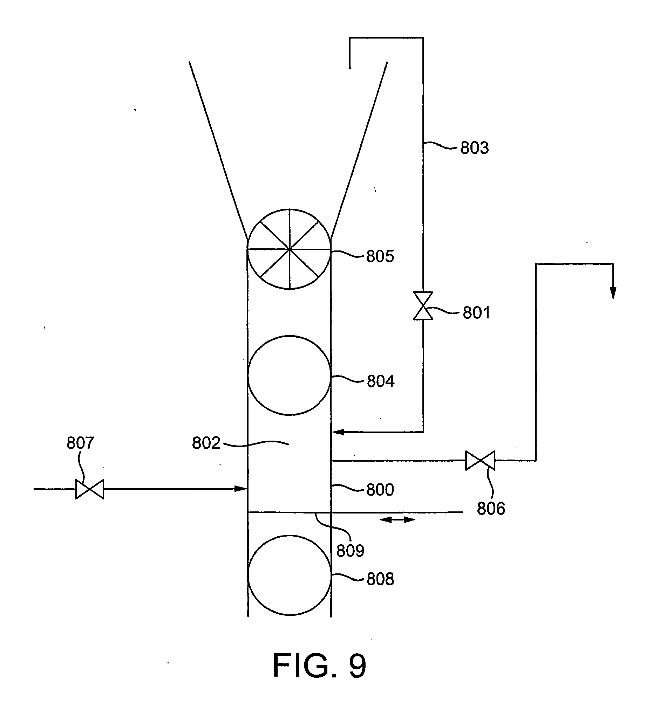

Figure 9 shows a preferred discharge arrangement which may be in combination with the reactor described above.

Figure 9 illustrates the lower portion of the reactor. Products falling into the CNF discharge port 912 (not shown) build-up in the portion 800 shown in Figure 9. To remove products from the reactor and to flush the lower portion of the reactor the following sequence is performed :
1. Valve 801 is opened which increases the pressure in the lower portion of the reactor 802 by means of the conduit 803 which receives pressurised gas from the top portion of the reactor. The valve is opened for approximately 60 seconds or until a suitable pressure has been reached.
2. Valve 804 (disposed in line with the outlet port) which is normally closed is opened.
3. A pump or impeller 805 is activated which acts to drive the product (which would normally sit on the top portion of valve 804) down towards the bottom of the reactor outlet port. In effect this fills the region 802 with product.
4. Valve 804 is closed.
5. Valve 806 is then opened to reduce the pressure in region 802 to atmospheric pressure for product release. Valve 807 is activated which introduces nitrogen into the reactor so as to flush reactor gas out of the portion 802 to the vent connected to valve 806. Valves 807 and 806 are closed.
6. Outlet valve 808 is then opened.
7. Linear valve 809 is then activated to allow the CNF product to drop out of the reactor.
8. After a period of approximately 1 minute (or after the product has fallen from the reactor) valves 809 and 808 are closed.
9. Valves 807 and 806 are then opened for approximately 2 minutes to flush the region 802 with nitrogen.
10. Valves 806 and 807 are closed.
11. The pressure in portion 802 is then reduced to approximately 1.5 bar using the valve 806.

Thus, the product can be removed from the reactor even if the product becomes compressed. Another aspect of an invention disclosed herein relates to a reactor as described above (and to a method of using the same) further comprising the discharge apparatus described above. A further aspect relates to the method of discharging product from such a reactor in accordance with the steps set out above.

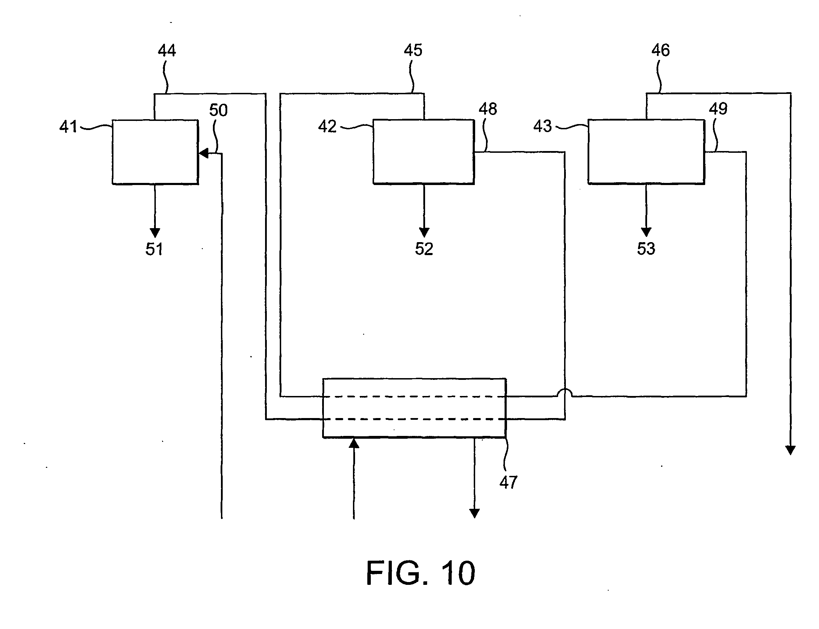

Figure 10 shows a serial arrangement of reactors. The reactors can advantageously be arranged so that the outlet gas from a first reactor, optionally after hydrogen removal, can serve as the inlet gas for a subsequent reactor.

Reactors 41, 42, 43 each have gas outlets 44, 45, 46. Gas outlet 44 feeds, via heat exchanger 47, the gas inlet 48 of the second reactor 42. Heat exchanger 47 acts to pre-heat the gas before entering the subsequent reactor to ensure that each reactor receives gas at the correct temperature. Similarly gas outlet 45 of the second reactor 42 flows, via heat exchanger 47, to gas inlet 49 of the third reactor 43. Gas outlet 46 of the third reactor 43 is fed to an off-gas handling system (not shown) and returned to the first reactor 41 gas inlet 50. The hydrogen removal units are not shown.

Any number of reactors can be arranged in series provided that the gas pressure leaving a first reactor is sufficient to suspend the reaction region in the subsequent reactor. Advantageously this arrangement can be used to produce a range of product sizes from each reactor product outlet ports 51, 52, 53 in the series by controlling the reaction conditions within each of the separate reactors, i.e. the temperature and pressure within each reactor in the series.

It will be appreciated that many of the features disclosed herein with reference to one arrangement of reactor can equally be applied to each of the other arrangements of reactors.

It will also be appreciated that the reactors described herein, and with reference to the drawings, can be used for the production of polymers, especially polymers of ethylenically unsaturated hydrocarbons, particularly olefin polymers. The reactor could therefore be used as a polymerisation reactor for the production of plastics.

## Claims

1. A reactor (1) for carbon nano-fibre production comprising a generally horizontal elongate cylindrical reaction vessel (902) arranged to rotate about its cylindrical axis and containing in use a particulate catalyst-containing reaction bed (72), said reaction vessel having a gas inlet port (1001) and a gas outlet port (1002)
**characterised in that** said ports are positioned such that one of said inlet and outlet ports is in said bed and the other is outside said bed.

2. A reactor as claimed in claim 1 wherein said inlet port (1001) is above said reaction bed.

3. A reactor as claimed in claim 2 wherein said outlet port (1002) also serves as an outlet port for carbon nano-fibres.

4. A reactor as claimed in claim 1 wherein said outlet port is above said reaction bed.

5. A reactor as claimed in claim 4 wherein said inlet port (1101) comprises a conduit elongate in the axial direction of said reaction vessel and having an elongate opening funnel-shaped in transverse cross section whereby to cause gas to enter said reaction bed (72) travelling in the same tangential direction as do the contents of said reaction bed.

6. A reactor as claimed in any one of the preceding claims wherein at least one said port (907) comprises a conduit elongate in the axial direction of said reaction vessel (902) and having at least one opening (923) along its length, and wherein said reactor further comprises a scraper (924) to clear blockage of said opening.

7. A reactor as claimed in any one of the preceding claims wherein said reaction vessel (902) is contained within a pressure vessel (901).

8. A reactor as claimed in any one of the preceding claims wherein carbonaceous feed gas is fed to said inlet port (907) along a feed conduit (44,45) provided with a heater (47) to heat said feed gas.

9. A reactor as claimed in claim 8 wherein at least part of said feed conduit is formed from an oxide dispersion strengthened alloy.

10. A reactor as claimed in either of claims 8 and 9 wherein said heater is a heat exchanger arranged to transfer heat from said reaction vessel or exhaust gas therefrom to said feed gas.

11. A reactor as claimed in claim 10 wherein said heat exchanger comprises a portion (903) of said feed conduit disposed around said reaction vessel (902) and within said pressure vessel (901).

12. A reactor as claimed in any one of the preceding claims wherein the inner surface of said reaction vessel (902) is of ceramic.

13. A method of producing carbon nano-fibres, which comprises catalytically converting a carbonaceous gas to carbon nano-fibres in a reactor containing a catalyst-containing particulate reaction bed within a generally horizontal elongate cylindrical reaction vessel rotating about its cylindrical axis, said vessel having a gas inlet port and a gas outlet port one of which is within said bed and the other of which is outside said bed.

14. A method as claimed in claim 13 wherein exhaust gas is removed from said reaction vessel through a said gas outlet port within said bed.

15. A method as claimed in claim 14 wherein said outlet port also serves as an outlet port for carbon nano-fibres.

16. A method as claimed in claim 13 wherein said carbonaceous gas is fed into said bed through a said gas inlet port within said bed.

17. A method as claimed in claim 16 wherein said inlet port comprises a conduit elongate in the axial direction of said reaction vessel and having an elongate opening funnel-shaped in transverse cross section whereby to cause carbonaceous gas to enter said reaction bed travelling in the same tangential direction as do the contents of said reaction bed.

## Patentansprüche

1. Reaktor (1) für die Kohlenstoffnanofasern-Produktion, mit einem im Allgemeinen horizontalen, länglichen bzw. langgestreckten zylindrischen Reaktionsgefäß (902), das dazu ausgelegt ist, sich um ihre Zylinderachse zu drehen, und im Gebrauch ein einen Katalysator enthaltendes Partikelreaktionsbett (92) enthält, wobei das Reaktionsgefäß einen Gaseinlassanschluss (1001) und einen Gasauslassanschluss (1002) besitzt,
**dadurch gekennzeichnet, dass** die Anschlüsse so positioniert sind, dass sich einer der Einlass und Auslassanschlüsse innerhalb des Bettes befindet und der andere sich außerhalb des Bettes befindet.

2. Reaktor nach Anspruch 1, wobei sich der Einlassanschluss (1001) über dem Reaktionsbett befindet.

3. Reaktor nach Anspruch 2, wobei der Auslassanschluss (1002) auch als ein Auslassanschluss für Kohlenstoffnanofasern dient.

4. Reaktor nach Anspruch 1, wobei sich der Auslassanschluss über dem Reaktionsbett befindet.

5. Reaktor nach Anspruch 4, wobei der Einlassanschluss (1101) eine Leitung aufweist, die in axialer Richtung des Reaktionsgefäßes lang gestreckt ist und eine lang gestreckte Öffnung besitzt, die im Querschnitt trichterförmig ist, um Gas dazu zu veranlassen, in das Reaktionsbett (72) einzutreten, indem es sich in derselben tangentialen Richtung bewegt wie die Inhalte des Reaktionsbettes.

6. Reaktor nach einem der vorhergehenden Ansprüche, wobei wenigstens einer der Anschlüsse (907) eine in axialer Richtung des Reaktionsgefäßes (902) lang gestreckte Leitung aufweist und auf seiner Länge wenigstens eine Öffnung (923) besitzt, wobei der Reaktor ferner einen Räumer (924) aufweist, um eine Blockierung der Öffnung zu beseitigen.

7. Reaktor nach einem der vorhergehenden Ansprüche, wobei das Reaktionsgefäß (902) in einem Druckgefäß (901) enthalten ist.

8. Reaktor nach einem der vorhergehenden Ansprüche, wobei dem Einlassanschluss (907) längs einer Beschickungsleitung (44, 45) kohlenstoffhaltiges Beschickungsgas zugeführt wird, wobei die Beschickungsleitung (44, 45) mit einer Heizeinrichtung (47) versehen ist, um das Beschickungsgas zu erwärmen.

9. Reaktor nach Anspruch 8, wobei wenigstens ein Teil der Beschickungsleitung aus einer durch Oxiddispersion verstärkten Legierung gebildet ist.

10. Reaktor nach Anspruch 8 oder 9, wobei die Heizeinrichtung ein Wärmetauscher ist, der dazu ausgelegt ist, Wärme von dem Reaktionsgefäß oder von Abgas hiervon an das Beschickungsgas zu übertragen.

11. Reaktor nach Anspruch 10, wobei der Wärmetauscher einen Abschnitt (903) der Beschickungsleitung, der um das Reaktionsgefäß (902) und innerhalb des Druckgefäßes (901) angeordnet ist, umfasst.

12. Reaktor nach einem der vorhergehenden Ansprüche, wobei die innere Oberfläche des Reaktorgefäßes (902) aus Keramik besteht.

13. Verfahren zum Produzieren von Kohlenstoffnanofasern, das das katalytische Umsetzen eines kohlenstoffhaltigen Gases in Kohlenstoffnanofasern in einem Reaktor, der ein einen Katalysator enthaltendes Partikelreaktionsbett in einem im Allgemeinen horizontalen, lang gestreckten zylindrischen Reaktionsgefäß enthält, das sich um seine Zylinderachse dreht, umfasst, wobei das Gefäß einen Gaseinlassanschluss und einen Gasauslassanschluss besitzt, wovon sich einer innerhalb des Bettes befindet und der andere sich außerhalb des Bettes befindet.

14. Verfahren nach Anspruch 13, wobei Abgas aus dem Reaktionsgefäß durch den Gasauslassanschluss innerhalb des Bettes abgeführt wird.

15. Verfahren nach Anspruch 14, wobei der Auslassanschluss auch als ein Auslassanschluss für Kohlenstoffnanofasern dient.

16. Verfahren nach Anspruch 13, wobei das kohlenstoffhaltige Gas dem Bett durch einen Gaseinlassanschluss innerhalb des Bettes zugeführt wird.

17. Verfahren nach Anspruch 16, wobei der Einlassanschluss eine in der axialen Richtung des Reaktionsgefäßes lang gestreckte Leitung aufweist und eine längliche Öffnung besitzt, die im Querschnitt trichterförmig ist, wodurch kohlenstoffhaltiges Gas dazu veranlasst wird, in das Reaktionsbett einzutreten, und sich dabei in derselben tangentialen Richtung wie die Inhalte des Reaktionsbettes bewegt.

## Revendications

1. Réacteur (1) pour une production de nanofibres de carbone comportant une cuve de réaction cylindrique allongée généralement horizontale (902) agencée pour tourner autour de son axe cylindrique et contenant en utilisation un lit de réaction contenant un catalyseur particulaire (72), ladite cuve de réaction ayant un orifice d'entrée de gaz (1001) et un orifice de sortie de gaz (1002)
**caractérisé en ce que** lesdits orifices sont positionnés de sorte que l'un desdits orifices d'entrée et de sortie est dans ledit lit et l'autre est à l'extérieur dudit lit.

2. Réacteur selon la revendication 1, dans lequel ledit orifice d'entrée (1001) se situe au-dessus dudit lit de réaction.

3. Réacteur selon la revendication 2, dans lequel ledit orifice de sortie (1002) sert également d'orifice de sortie pour des nanofibres de carbone.

4. Réacteur selon la revendication 1, dans lequel ledit orifice de sortie se situe au-dessus dudit lit de réaction.

5. Réacteur selon la revendication 4, dans lequel ledit orifice d'entrée (1101) comporte un conduit allongé dans la direction axiale de ladite cuve de réaction et ayant une forme d'entonnoir à ouverture allongée en coupe transversale de manière à amener du gaz à pénétrer dans ledit lit de réaction (72) qui se déplace dans la même direction tangentielle que le contenu dudit lit de réaction.

6. Réacteur selon l'une quelconque des revendications précédentes, dans lequel au moins l'un dudit orifice (907) comporte un conduit allongé dans la direction axiale de ladite cuve de réaction (902) et ayant au moins une ouverture (923) le long de sa longueur, et dans lequel ledit réacteur comporte en outre un racleur (104) pour débloquer ladite ouverture.

7. Réacteur selon l'une quelconque des revendications précédentes, dans lequel ladite cuve de réaction (902) est contenue dans une cuve sous pression (901).

8. Réacteur selon l'une quelconque des revendications précédentes, dans lequel un gaz d'alimentation carboné est délivré audit orifice d'entrée (907) le long d'un conduit d'alimentation (44, 45) muni d'un élément chauffant (47) pour chauffer ledit gaz d'alimentation.

9. Réacteur selon la revendication 8, dans lequel au moins une partie dudit conduit d'alimentation est formée d'un alliage renforcé à dispersion d'oxyde.

10. Réacteur selon l'une ou l'autre des revendications 8 et 9, dans lequel ledit élément chauffant est un échangeur de chaleur conçu pour transférer de la chaleur de ladite cuve de réaction ou un gaz d'échappement depuis celui-ci vers ledit gaz d'alimentation.

11. Réacteur selon la revendication 10, dans lequel ledit échangeur de chaleur comporte une partie (903) dudit conduit d'alimentation disposée autour de ladite cuve de réaction (902) et dans ladite cuve sous pression (901).

12. Réacteur selon l'une quelconque des revendications précédentes, dans lequel la surface intérieure de ladite cuve de réaction (902) est constituée de céramique.

13. Procédé de production de fibres de nanocarbone, lequel comporte la conversion de manière catalytique d'un gaz carboné en nanofibres de carbone dans un réacteur contenant un lit de réaction particulier contenant un catalyseur dans une cuve de réaction cylindrique allongée généralement horizontale tournant autour de son axe cylindrique, ladite cuve ayant un orifice d'entrée de gaz et un orifice de sortie de gaz l'un d'eux étant positionné dans ledit lit et l'autre à l'extérieur dudit lit.

14. Procédé selon la revendication 13, dans lequel un gaz d'échappement est retiré de ladite cuve de réaction via un orifice de sortie de gaz contenu dans ledit lit.

15. Procédé selon la revendication 14, dans lequel ledit orifice de sortie sert également d'orifice de sortie pour des nanofibres de carbone.

16. Procédé selon la revendication 13, dans lequel ledit gaz carboné est délivré dans ledit lit via ledit orifice d'entrée de gaz dans ledit lit.

17. Procédé selon la revendication 16, dans lequel ledit orifice d'entrée comporte un conduit allongé dans la direction axiale de ladite cuve de réaction et ayant une forme d'entonnoir à ouverture allongée en coupe transversale de manière à amener du gaz carboné à pénétrer dans ledit lit de réaction qui se déplace dans la même direction tangentielle que le contenu dudit lit de réaction.
